(19) Europäisches Patentamt
European Patent Office
Office européen des brevets

(11) EP 1 144 490 B1

(12) **EUROPEAN PATENT SPECIFICATION**

(45) Date of publication and mention
of the grant of the patent:
**02.05.2003 Bulletin 2003/18**

(51) Int Cl.⁷: **C08J 9/00**, C08J 9/12,
C08L 27/06

(21) Application number: **99960546.2**

(22) Date of filing: **22.11.1999**

(86) International application number:
**PCT/US99/27645**

(87) International publication number:
**WO 00/031170 (02.06.2000 Gazette 2000/22)**

(54) **MICROCELLULAR POLYVINYL CHLORIDE FOAM**

MIKROZELLULARER POLYVINYLCHLORIDSCHAUM

MOUSSE DE POLYCHLORURE DE VINYLE MICROCELLULAIRE

(84) Designated Contracting States:
**AT BE CH CY DE DK ES FI FR GB GR IE IT LI LU
MC NL PT SE**

(30) Priority: **25.11.1998 US 109757 P
14.12.1998 US 211279**

(43) Date of publication of application:
**17.10.2001 Bulletin 2001/42**

(73) Proprietor: **Trexel Inc.
Woburn, MA 01801 (US)**

(72) Inventor: **CHEN, Liqin
West Roxbury, MA 02132 (US)**

(74) Representative: **HOFFMANN - EITLE
Patent- und Rechtsanwälte
Arabellastrasse 4
81925 München (DE)**

(56) References cited:
**WO-A-98/08667          US-A- 3 975 315
US-A- 5 691 393          US-A- 5 707 573**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of Invention:

The present invention relates generally to polymeric foams, and more particularly to microcellular rigid polyvinyl chloride foams and methods for their production.

Background of the Invention:

Polymeric foams include a plurality of voids, also called cells, in a polymer matrix. By replacing solid plastic with voids, polymeric foams use less raw material than solid plastics for a given volume. Thus, by using polymeric foams in certain applications instead of solid plastics, material costs may be reduced.

Microcellular foams have smaller cell sizes and higher cell densities than conventional polymeric foams. Typically, microcellular foams are defined as having average cell sizes of less than 100 microns and a cell density of greater than $10^6$ cells/cm$^3$ of solid plastic. Microcellular foams can be produced in either a batch process or a continuous process. The batch process generally involves saturating a solid plastic part with gas in a high-pressure chamber, reducing the pressure in the chamber to nucleate cells, and heating the part to promote cell growth. With the batch process, however, sample dimensions are very limited, only a small number of samples can be processed at once, and processing times are long.

Continuous processes for the production of microcellular material overcome some of the above-mentioned shortcomings with the batch process. For example, microcellular plastics can be produced in a variety of forms in a continuous extrusion process. The process, generally, involves injecting a blowing agent into the polymer melt in an extruder, creating a single phased solution of polymeric melt and blowing agent, dropping the pressure of the solution to nucleate a plurality of cells in the polymer, shaping and cooling the extrudate to form a microcellular product. Several patents describe aspects of microcellular materials and microcellular processes.

U.S. Patent No. 4,473,665 (Martini-Vvedensky, et al.; September 25, 1984) describes a process for making foamed polymer having cells less than about 100 microns in diameter. In the technique of Martini-Vvedensky, et al., a material precursor is saturated with a blowing agent, the material is placed under high pressure, and the pressure is rapidly dropped to nucleate the blowing agent and to allow the formation of cells. The material then is frozen rapidly to maintain a desired distribution of microcells

U.S. Patent No. 5,158,986 (Cha, et al.; October 27, 1992) describes formation of microcellular polymeric material using a supercritical fluid as a blowing agent. In a batch process of Cha, et al., a plastic article is submerged at pressure in supercritical fluid for a period of time, and then quickly returned to ambient conditions creating a solubility change and nucleation. In a continuous process, a polymeric sheet is extruded, and then can be run through rollers in a container of supercritical fluid at high pressure, and then exposed quickly to ambient conditions. In another continuous process, a supercritical fluid-saturated molten polymeric stream is established. The stream is rapidly heated, and the resulting thermodynamic instability (solubility change) creates sites of nucleation, while the system is maintained under pressure preventing significant growth of cells. The material then is injected into a mold cavity where pressure is reduced and cells are allowed to grow.

International patent publication no. WO 98/08667 (Burnham et al.) provides methods and systems for producing microcellular material, and microcellular articles. In one method of Bumham et al., a fluid, single phase solution of a precursor of foamed polymeric material and a blowing agent is continuously nucleated by dividing the stream into separate portions and separately nucleating each of the separate portions. The divided streams can be recombined into a single stream of nucleated, fluid polymeric material. The recombined stream may be shaped into a desired form, for example, by a shaping die. Bumham et al. also describes a die for making advantageously thick microcellular articles, that includes a multiple pathway nucleation section. Other methods describe the fabrication of very thin microcellular products, as well. In particular, a method for continuously extruding microcellular material onto a wire, resulting in very thin essentially closed cell microcellular insulating coating secured to the wire, is provided. In some of the methods, pressure drop rate is an important feature and techniques to control this and other parameters are described.

Conventional polyvinyl halide foams are currently used in many applications. For example, rigid PVC foam is used as pipe, packaging material, and wood replacement material. To improve the toughness and impact strength of rigid vinyl halide foams, impact modifiers are added to the polymeric composition in certain applications. For example, U.S. Patent No. 4,120,833 describes a modified rigid PVC foam in which impact modifiers are added to a PVC formulation to improve the impact strength of the foam. See also U.S. Patent No. 3,975,315. Impact modifiers are typically small particles that are incorporated into the polymer matrix. Examples of impact modifiers include core-shell modifier particles which are polymer-rubber blends, such as modified-butadiene/styrene. Impact modifiers, however, are typically much more expensive than the solid plastic they replace, and can reduce high-temperature performance.

Thus, there exists a need for rigid vinyl halide foams having a reduced amount of impact modifier that still retain sufficient toughness.

Summary of the Invention:

The present invention has several aspects. One of these is defined in claim 1 below. Another is defined in claim 19 below. The invention provides a microcellular rigid polyvinyl chloride (PVC) foam, and a process for producing the foam, that does not include significant amounts of impact modifier but still exhibits toughness. The microcellular foam can be produced in a continuous extrusion process, for example. A variety of microcellular rigid polyvinyl halide foam articles, such as rigid PVC profiles, are envisioned.

One aspect of the invention provides a microcellular foam article including a polymeric matrix that includes a plurality of cells having an average cell size of less than about 100 microns. The polymeric matrix includes a rigid PVC polymer, and an impact modifier in an amount less than about 5 weight percent of the polymeric matrix. The microcellular foam article has a percent elongation at break of greater than about 40%.

In another aspect, the invention provides a method of processing microcellular material in a polymer processing apparatus including a polymer processing screw constructed to rotate in a barrel. The method includes urging polymeric material in a downstream direction in a polymer processing space between the polymer processing screw and the barrel. The polymeric material includes a rigid PVC, and an impact modifier in an amount less than 5 weight percent of the polymeric material. The method also includes the step of introducing a blowing agent into the polymeric material in the polymer processing space to create a solution of blowing agent and polymeric material, and the step of forming a microcellular article comprising a polymer matrix including an average cell size of less than about 100 microns and a percent elongation at break of greater than about 40%.

Among other advantages, the invention provides a tough, rigid PVC microcellular foam without a large amount, if any, impact modifier in the polymeric composition. Because impact modifiers are typically significantly more expensive than plastic, the microcellular foams can be produced at cost savings without sacrificing their toughness. In certain embodiments, the foams are suitable in applications that require rigidity, as well, as toughness, such as rigid profiles.

Furthermore, the invention provides a viable continuous process for producing the rigid, PVC microcellular foam. In some embodiments, the foam is produced in an extrusion process using a low percentage of an atmospheric gas blowing agent. By utilizing relatively low blowing agent amounts, the process saves on blowing agent costs. Also, the process, unlike some conventional foam processes, advantageously avoids using environmentally hazardous gases.

Other advantages, novel features, and objects of the invention will become apparent from the following detailed description of the invention when considered in conjunction with the accompanying drawings, which are schematic and which are not intended to be drawn to scale. In the figures, each identical or nearly identical component that is illustrated in various figures is represented by a single numeral. For purposes of clarity, not every component is labeled in every figure, nor is every component of each embodiment of the invention shown where illustration is not necessary to allow those of ordinary skill in the art to understand the invention.

Brief Description of the Drawings:

Fig. 1 illustrates an extrusion system for producing microcellular foam.
Fig. 2 illustrates a multi-hole blowing agent feed orifice arrangement and extrusion screw.
Figs. 3 and 3A schematically illustrate respective alternate configurations for microcellular foam extrusion systems.
Fig. 4 is a photocopy of an SEM image of the microcellular polyvinyl chloride produced in Example 1.

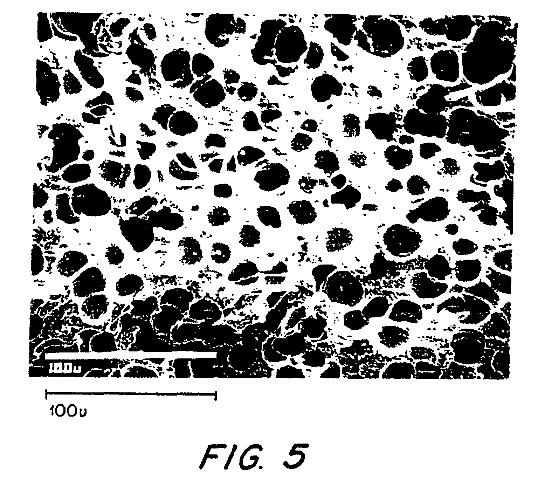

Fig. 5 is a photocopy of an SEM image of the microcellular polyvinyl chloride produced in Example 3.

Detailed Description of the Invention:

The various embodiments and aspects of the invention will be better understood from the following definitions. A "microcellular foam" is defined as a foamed material containing cells of average size of less than about 100 microns in diameter or material of cell density of generally greater than at least about $10^6$ cells/$cm^3$, or preferably both. As used herein, "nucleation" defines a process by which a homogeneous, single-phase solution of polymeric material, in which is dissolved molecules of a species that is a gas under ambient conditions, undergoes formations of clusters of molecules of the species that define "nucleation sites", from which cells will grow. That is, "nucleation" means a change from a homogeneous, single-phase solution to a multiphase mixture in which, throughout the polymeric material, sites of aggregation of at least several molecules of blowing agent are formed.

A "rigid" vinyl halide polymer, as used herein, refers to a vinyl halide polymer having a Young's modulus (as measured in accordance to ASTM D-638 *Tensile Properties for Plastics)* of greater than 1,500 MPa (213,000 psi). A "flexible" vinyl halide polymer has a Young's modulus (as measured in accordance to ASTM D-638 *Tensile Properties for Plastics)* of less than 1,000 MPa (142,000 psi). The above identified Young's moduli are for solid, unfoamed, rigid and flexible vinyl halide polymers, respectively. A "rigid" microcellular vinyl halide foam may have a Young's modulus of less than 1,500 MPa, for example, because the foam has a lower density than the solid plastic. An "impact modifier" as used herein, refers to any additive that increases the impact strength, toughness, or percent elongation at break of a composition. "Void fraction" is defined as the total volume fraction of cells in a foam. "Percent elongation at break" is measured in accordance with ASTM D-638 *Tensile Properties for Plastics,* and is defined as follows:

$$\%Elongation = \frac{(l_b - l_i)}{l_i} x100$$

wherein $l_i$ is the initial length of the sample at the beginning of the tensile test and $l_b$ is the length of the sample at its breaking point.

The present invention provides a rigid microcellular vinyl halide foam having a surprisingly high percent elongation at break. Percent elongation at break is a measure of the toughness of a material. Toughness, as is known in the art, can be quantified as the area under a stress-strain curve obtained in a tensile test and thus is proportional to the percent elongation at break. For example, rigid PVC materials that elongate greater than about 40%, due to the presence of impact modifiers, are generally considered to exhibit a relatively high toughness. The microcellular rigid vinyl halide foams, in accordance with the invention, have elongations at break of greater than 40%, and in many cases substantially higher than 40%. In preferred embodiments, the foams have an elongation at break of greater than 75%, more preferably greater than 100%, and even more preferably greater than 110%.

The high elongations in the foams are achieved, surprisingly, even though the rigid vinyl halide composition includes less than about 5 weight percent impact modifier, and in many embodiments, significantly less than 5 weight percent. In a preferred case, the rigid vinyl halide composition has less than 1 weight percent impact modifier. In the most preferred case, the rigid vinyl halide composition are substantially free of impact modifier. For example, rigid foams having a percent elongation of greater than 110% have been produced from compositions substantially free of impact modifier.

The present invention encompasses microcellular foams of any rigid vinyl halide polymer composition. Rigid polyvinyl chloride (PVC) microcellular foams are a particularly useful embodiment that may have many applications. The composition of the foam may consist essentially of the rigid vinyl halide polymer while also including a variety of other non-impact modifying additives or processing aids, as known in the art for particular uses. In some embodiments, fillers, such as calcium carbonate or talc, are added. Optionally, the composition may include a small amount of plasticizer. The plasticizer level must be small enough so that the vinyl halide polymer still exhibits rigid behavior. In the preferred case, the composition includes no plasticizer. A small amount of lubricant, for example wax, may be added as a processing aid, if required. Colorants may also be included in the formulation to effect the color of the resulting foam.

The rigid microcellular vinyl halide foam of the present invention can be produced over a broad density range as required by its end use. The density, and thus the void fraction, of the foam can be controlled by selecting appropriate processing parameters. In most cases, the foams have a void fraction greater than 0.10, though other embodiments envision densities outside this range. In a set of preferred embodiments, the foam has a void fraction of greater than 0.2, and even more preferably greater than 0.3, or greater than 0.4, 0.5, or 0.6. The present foams with a void fraction between 0.3 and 0.7 have a desirable balance between rigidity, toughness, and density reduction.

The invention provides microcellular rigid vinyl halide foam articles in a number of forms including profiles, sheet, pipe, and molded articles in an unlimited variety of shapes. The articles, in a particularly advantageous embodiment, may be thin in cross section due, in part, to the small cell sizes. For example, such articles can including portions having a thickness in cross section of less than 1.0 mm (0.040 inches) can readily be formed.

Foam articles, according to the invention, have an average cell size of less than 100 microns. In preferred embodiments, microcellular material of the invention is produced having average cell size of less than about 50 microns. In some embodiments particularly small cell size is desired, and in these embodiments material of the invention has average cell size of less than about 20 microns, more preferably less than about 10 microns, and more preferably still less than about 5 microns. The microcellular material preferably has a maximum cell size of about 100 microns. In embodiments where particularly small cell size is desired, the material can have maximum cell size of about 50 microns, more preferably about 25 microns, and more preferably still about 15 microns. A set of embodiments includes all combinations of these noted average cell sizes and maximum cell sizes. For example, one embodiment in this set of embodiments includes microcellular material having an average cell size of less than about 30 microns with a maximum cell size of about 50 microns, and as another example an average cell size of less than about 30 microns with a maximum cell size of about 35 microns, etc. That is, microcellular material designed for a variety of purposes can be produced having a particular combination of average cell size and a maximum cell size preferable for that purpose.

In some embodiments, the cell size varies across the cross-section of the article. In these embodiments, typically, cell sizes at the center of the cross-section are larger than cell sizes at the surface of the cross-section. In certain cases, the ratio of cell size in the center of the cross section to cell size at the surface is greater than 3. For example, in some embodiments, the cell size in the center is greater than about 80 microns and less than about 120 microns and the cell size at the surface is greater than about 5 microns and less than about 25 microns.

The cell structure of the rigid microcellular PVC foams, preferably, is a closedcell structure. A substantially closed cell structure has limited interconnection between adjacent cells and generally, is meant to define material that, at a thickness of about 100 microns, contains no connected cell pathway through the material. It is believed that the closed cell structure may, advantageously, enhance elongation properties due to the absence of a long interconnected pathway which could act as a site that leads to premature fracture of the material.

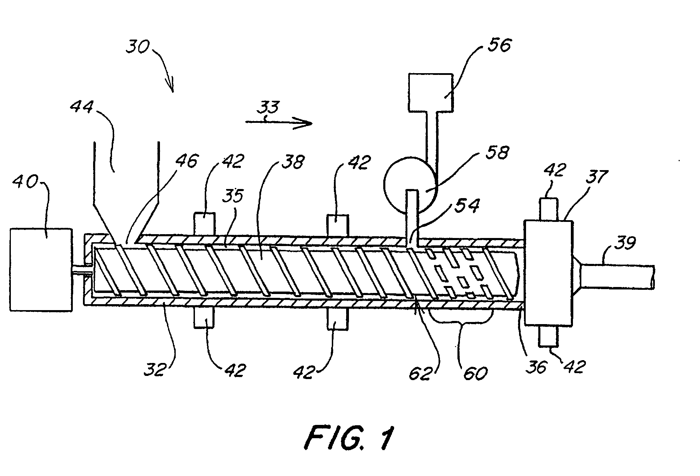

Referring to Fig. 1, an extrusion system 30 for the production of microcellular rigid PVC foam is illustrated schematically. The extrusion system includes a screw 38 that rotates within a barrel 32 to convey, in a downstream direction 33, polymeric material in a processing space 35 between the screw and the barrel. The polymeric material is extruded through a die 37 fluidly connected to processing space 35 and fixed to a downstream end 36 of barrel 32. Die 37 is configured to form an extrudate 39 of microcellular rigid vinyl halide foam in the desired shape, as described further below.

Extrusion screw 38 is operably connected, at its upstream end, to a drive motor 40 which rotates the screw. Although not shown in detail, extrusion screw 38 includes feed, transition, gas injection, mixing, and metering sections. In a particularly useful extrusion screw configuration for processing rigid poly vinyl halide polymers, the extrusion screw includes in the downstream direction a feed section, a transition section, a first mixing section, a first metering section, a gas injection section, a second mixing section, and a second metering section.

Positioned along extrusion barrel 32, optionally, are temperature control units 42. Control units 42 can be electrical heaters, can include passageways for temperature control fluid, or the like. Units 42 can be used to heat a stream of pelletized or fluid polymeric material within the extrusion barrel to facilitate melting, and/or to cool the stream to control viscosity, skin formation and, in some cases, blowing agent solubility. The temperature control units can operate differently at different locations along the barrel, that is, to heat at one or more locations, and to cool at one or more different locations. Any number of temperature control units can be provided. Temperature control units 42 can also optionally be used to heat die 37.

Extrusion barrel 32 is constructed and arranged to receive a precursor of a fluid polymeric material. Typically, this involves a standard hopper 44 for containing pelletized rigid vinyl halide polymeric material to be fed into polymer processing space 35 through orifice 46. Pellets are received into the feed section of screw and conveyed in a downstream direction as the screw rotates. Heat from extrusion barrel 32 and shear forces arising from the rotating screw, act to soften the pellets within the transition section. Typically, by the end of the first mixing section the softened pellets have been gelated, that is welded together to form a uniform fluid stream substantially free of air pockets.

The blowing agent is introduced into the polymer stream through a port 54 in fluid communication with a source 56 of a physical blowing agent. The port can be positioned to introduce the blowing agent at any of a variety of locations along the extrusion barrel 32. Preferably, as discussed further below, the port introduces blowing agent at the gas injection section of the screw, where the screw includes multiple flights.

Any of a wide variety of blowing agents known to those of ordinary skill in the art such as hydrocarbons, chlorofluorocarbons, nitrogen, carbon dioxide, and the like can be used in connection with this embodiment of the invention and, according to a preferred embodiment, source 56 provides carbon dioxide as a blowing agent. In another preferred embodiment, source 56 provides nitrogen as a blowing agent. In particularly preferred embodiments solely carbon dioxide or nitrogen is respectively used. A pressure and metering device 58 typically is provided between blowing agent source 56 and port 54. Blowing agents that are in the supercritical fluid state in the extruder are especially preferred, in particular supercritical carbon dioxide and supercritical nitrogen.

Device 58 can be used to meter the blowing agent so as to control the amount of the blowing agent in the polymeric stream within the extruder to maintain a level of blowing agent at a level. In a preferred embodiment, device 58 meters the mass flow rate of the blowing agent. The blowing agent is generally less than about 15% by weight of polymeric stream and blowing agent. Surprisingly, it has been discovered microcellular rigid vinyl halide foam can be produced at relatively low blowing agent percentages, for example less than 3% by weight of polymeric stream and blowing agent. In preferred embodiments, carbon dioxide or nitrogen are respectively used as blowing agents at levels less than 1%, and even less than 0.1 percent, by weight of polymeric stream and blowing agent. In most embodiments, nitrogen is used at lower levels than carbon dioxide.

The pressure and metering device can be connected to a controller (not shown) that also is connected to drive motor 40 and/or a drive mechanism of a gear pump (not shown) to control metering of blowing agent in relationship to flow of polymeric material to very precisely control the weight percent blowing agent in the fluid polymeric mixture.

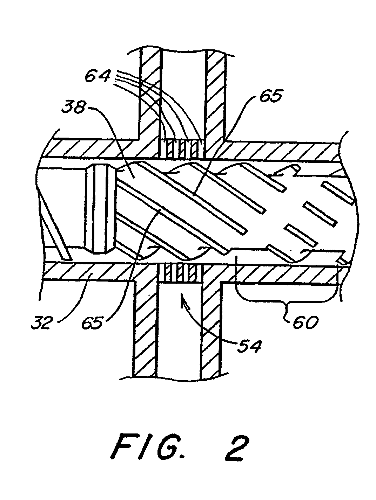

Referring now to Fig. 2, a preferred embodiment of the blowing agent port is illustrated in greater detail and, in addition, two ports on opposing top and bottom sides of the barrel are shown. In this preferred embodiment, port 54 is located in the gas injection section of the screw at a region upstream from mixing section 60 of screw 38 (including highly-broken flights) at a distance upstream of the mixing section of no more than about 4 full flights, preferably no more than about 2 full flights, or no more than I full flight. Positioned as such, injected blowing agent is very rapidly and evenly mixed into a fluid polymeric stream to promote production of a single-phase solution of the foamed material precursor and the blowing agent.

Port 54, in the preferred embodiment illustrated, is a multi-hole port including a plurality of orifices 64 connecting the blowing agent source with the extruder barrel. As shown, in preferred embodiments a plurality of ports 54 are provided about the extruder barrel at various positions radially and can be in alignment longitudinally with each other. For example, a plurality of ports 54 can be placed at the 12 o'clock, 3 o'clock, 6 o'clock, and 9 o'clock positions about the extruder barrel, each including multiple orifices 64. In this manner, where each orifice 64 is considered a blowing agent orifice, the invention includes extrusion apparatus having at least about 10, preferably at least about 40, more preferably at least about 100, more preferably at least about 300, more preferably at least about 500, and more preferably still at least about 700 blowing agent orifices in fluid communication with the extruder barrel, fluidly connecting the barrel with a source of blowing agent.

Also in preferred embodiments is an arrangement (as shown in Fig. 2) in which the blowing agent orifice or orifices are positioned along the extruder barrel at a location where, when a preferred screw is mounted in the barrel, the orifice or orifices are adjacent full, unbroken flights 65. In this manner, as the screw rotates, each flight, passes, or "wipes" each orifice periodically. This wiping increases rapid mixing of blowing agent and fluid foamed material precursor by, in one embodiment, essentially rapidly opening and closing each orifice by periodically blocking each orifice, when the flight is large enough relative to the orifice to completely block the orifice when in alignment therewith. The result is a distribution of relatively finely-divided, isolated regions of blowing agent in the fluid polymeric material immediately upon injection and prior to any mixing. In this arrangement, at a standard screw revolution speed of about 30 rpm, each orifice is passed by a flight at a rate of at least about 0.5 passes per second, more preferably at least about 1 pass per second, more preferably at least about 1.5 passes per second, and more preferably still at least about 2 passes per second. In preferred embodiments, orifices 54 are positioned at a distance of from about 15 to about 30 barrel diameters from the beginning of the screw (at upstream end 34).

Referring again to Fig. 1, the second mixing section of screw 38, following the gas injection section, is constructed to mix the blowing agent and polymer stream to promote formation of a single phase solution of blowing agent and polymer. The second mixing section includes unbroken flights which break up the stream to encourage mixing. Downstream the second mixing section, second mixing section builds pressure in the polymer-blowing agent stream prior to die 37.

Die 37 includes inner passageways (not shown) connected to polymer processing space 35 through which the polymer stream flows. The shape and dimensions of the internal passageways, known as die geometry, control the shape of extrudate 39. Die 37 can have any variety of configurations, as is well known in the art, to produce microcellular vinyl halide foam in specific forms. For example, according to one preferred embodiment, the die 37 designed to form pipe. In other embodiments, the die is configured to form profiles, sheet, or strands. In certain embodiments, the die may be a tapered die, that is the cross-sectional area of the die passageways decreases in a downstream direction. In particularly preferred embodiments, dies described in international patent publication no. WO 98/08667 are used.

In addition to shaping extrudate 39, die 37 may also perform the function of nucleating the polymer and blowing agent single-phase solution. The pressure in the single phase solution drops as the solution flows through the internal passageways of the die. This pressure drop causes the solubility of the blowing agent in the polymer to decrease, which is the driving force for the cell nucleation process. The extent of pressure drop depends upon the dimensions of the passageway. Specifically the dimensions that effect pressure drop include the shape of the passageway, the length of the passageway, and the thickness of the passageway. Typically, the geometry of the die is designed, as is known in the art, to give a pressure drop suitable for cell nucleation in accordance to microcellular foam requirements. Under processing conditions, the pressure drop across die 37 is generally greater than 7.04 MPa (1,000 psi), preferably greater than 14.08 MPa (2,000 psi) and more preferably greater than 21.13 MPa (3,000 psi).

In some embodiments, die 37 is also designed to provide a minimum pressure drop rate (dP/dt) as the single-phase solution flows across the passageway. Pressure drop rate, which depends upon die geometry and flow rate, also effects the cell nucleation process. In certain embodiments, the die is configured, as is well-known in the art, to provide a pressure drop rate preferably of greater than 0.1 GPa/s, in some embodiments greater than 1.0 GPa/s, and, in other embodiments greater than 5.0 GPa/s.

Extrudate 39 exits die 37 at a temperature greater than room temperature due to elevated processing temperatures in the extruder. Preferably, the melt temperature of the polymer-blowing agent stream immediately upstream of the die is between 160°C and 195°C, and preferably between 175°C and 190°C. The melt temperature is generally lower than typical melt temperatures (greater than 190°C) in processes for conventional rigid vinyl halide foams. The melt temperature for the polymer-blowing agent stream in the present process is generally closer to the processing temperature of the solid polymer (prior to gas introduction) than in typical microcellular processes. That is, microcellular processes for other polymers typically involve cooling the polymer-blowing agent solution to a greater extent than envisioned in embodiments of this process.

As a result of elevated temperatures, extrudate 39 is typically soft enough so that the nucleated cells grow. As the extrudate cools in the atmosphere and becomes more solid, cell growth is restricted. In certain embodiments, it is advantageous to provide external cooling means to speed the cooling rate of the extrudate. For example, in these embodiments, cooling may be accomplished by blowing air on the extrudate, contacting the extrudate with a cool surface, or submerging the extrudate in a liquid medium.

Other equipment (not illustrated) downstream of the die is used, as required, for additional shaping of the extrudate into final form. Examples of such equipment include a vacuum sizing calibrater, which is used to produce pipe, and a cutter and cooling can combination, which is used to produce sheet. Other downstream equipment such as pullers and/or winders can be used, as required, for pulling the extrudate away from the die and converting the extrudate to a storable form.

It should be understood that the above described system and process is not limiting. Modifications, well-known in the art, can be made to the system and process in various embodiments of the invention. For example, extrusion system 30, in a set of embodiments, can include twin screws, that is two separately operating screws aligned in parallel within the same barrel, as opposed to the single-screw in Fig. 1. In certain embodiments, the twin screws are driven by separate motors. In some cases, the twin screws counter-rotate (rotate in opposite directions) as is well known in the art of processing rigid vinyl halide material.

In other embodiments, an injection molding unit may replace die 37 at the end of the barrel. Injection molding units include a gate fluidly connected to polymer processing space 35 downstream from the screw. The plastic-blowing agent stream is injected through the gate into a mold shaped to form a desired product. Other nonlimiting embodiments are further illustrated in the following Figures. It should be understood that any of the embodiments may be used in connected with one another as is known in the art.

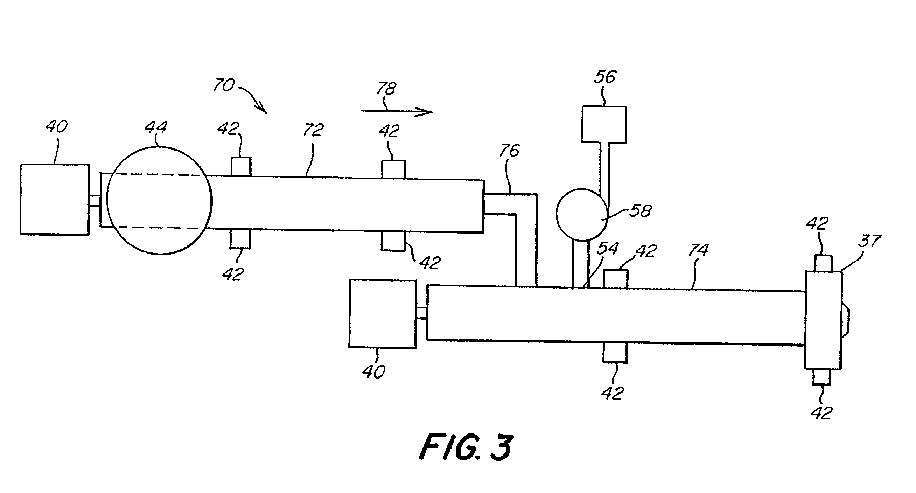

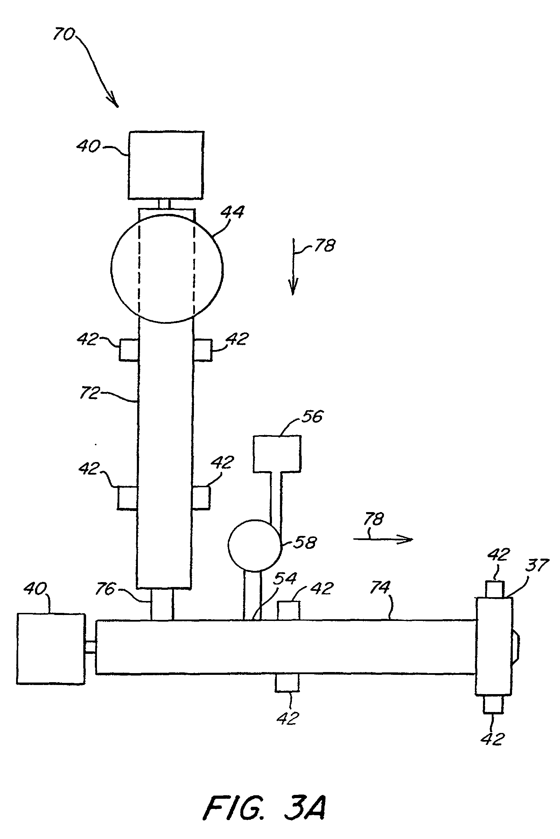

Referring to Fig. 3, an alternative extrusion system 70 for producing microcellular vinyl halide foam includes a tandem extruder line. The tandem line includes a primary extruder 72 and a secondary extruder 74 arranged in parallel configuration and connected through a transfer pipe 76. In one set of embodiments, the primary extruder is, for example, a counter rotating twin screw extruder. In another set of embodiments, the primary extruder is a single-screw extruder. As described above, vinyl halide pellets are supplied into the primary extruder through hopper 44. In a preferred embodiment, the screw (not illustrated), or combination of screws in the twinscrew embodiment, in the primary extruder has several sections in a downstream direction 78 including a feed section, a transition section, a first mixing section and a first metering section. Polymeric material from the primary extruder is transferred to the secondary extruder through transfer pipe 76. The secondary extruder includes a blowing agent injection port 54, as described above, which preferably introduces blowing agent into the polymeric melt at the gas injection section of the screw. As described above with respect to Fig. 1, the secondary screw includes a second mixing section for gas dispersion and a metering section to build pressure before die 37. System 70 can be modified in any number of ways, known in the art, in accordance with the present invention. For example, as illustrated in Fig. 3A, the tandem line includes a primary extruder and a secondary extruder arranged in a perpendicular configuration.

The function and advantage of these and other embodiments of the present invention will be more fully understood from the examples below. The following examples are intended to illustrate the benefits of the present invention, but do not exemplify the full scope of the invention.

## Example 1

A tandem extrusion system was used, as illustrated schematically in Fig. 3A. The system included a primary extruder (IDE Extruder MDE70) with a counter-rotating twin screw connected via a transfer pipe having an inner diameter of 30 mm to a secondary extruder with a single screw. The single screw in the secondary had an 80 mm diameter and L/D ratio of 28.

A standard rigid polyvinyl chloride (PVC) formulation (Harcros) was used including 10 parts calcium carbonate by weight as a filler and a small amount of lubricant. The formulation did not include any plasticizer or impact modifier. Nitrogen was used as the blowing agent.

Nitrogen was injected into the secondary extruder through an injection system positioned at a distance approximately 6 screw diameters from the transfer pipe port. The injection system included four equally spaced circumferentially, radially positioned ports. Each port included 176 orifices, for a total of 704 orifices, having a 0.5 millimeters diameter. A profile die having an exit gap of about 0.4 to 0.45 millimeters was attached at the end of the secondary extruder. Standard downstream equipment for solid profile extrusion was used, including a vacuum sizing calibrator, to produce profile samples with wall thicknesses of about 0.5mm. The pulling speed ranged from about 6 to 7 meters per minute.

Samples were cut in standard sizes, that is, 76 mm long by 12.7 mm wide (3 inches long and 0.5 inches wide) for tensile testing following ASTM D-638 "Tensile Properties for Plastics". An Instron-4444 testing instrument (Instron Corporation, Canton, MA) having a load cell of 227 kg (500 lbs.) was used to perform the tensile tests. During the testing, the specimen grip length was set at 51 mm (2.0 inches) and the cross head speed was 12.7 mm (0.5 inches per minute). Samples were tested until fracture.

The density of the foam samples were measured in accordance with ASTM D-792, "Density and Specific Gravity of Plastics by Displacement" using the AG104 instrument manufactured by Nettler Toledo.

The process conditions of Example 1 were as follows. The output was 46.2 kg/hr. The melt temperature measured immediately prior to the die was 185°C. The die pressure was 227 bar. The percent nitrogen was 0.065% by weight PVC formulation. The pressure drop rate (dP/dt) was 0.36 GPa/s.

Example 1 samples had an elongation percent at break value of 102%. Samples from Example 1 had a void fraction of 0.37.

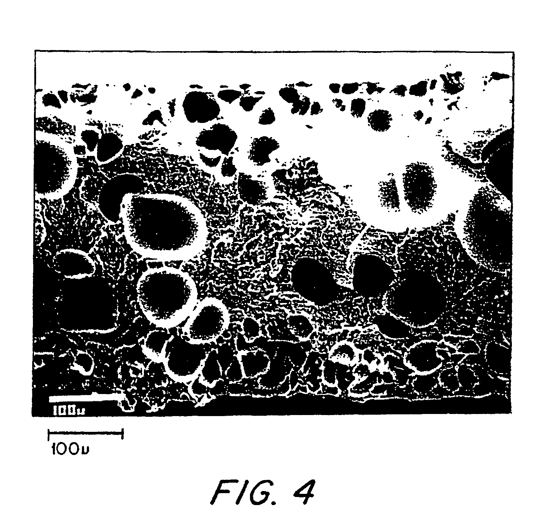

Fig. 4 is a scanning electron microscope (SEM) image of a typical cross section of an Example 1 sample. The image illustrates that very fine cells, on the order of 15 microns, are present in a surface region of the sample. The cell size is larger in a center region of the cross section, with an average size of about 100 microns. The fine cells at the surface have a low inter-connectivity. The cell size in combination with the low inner connectivity may lead to the high percent elongation at break of this sample.

Example 2

Example 2 was produced using the same extruder system and the same polyvinyl chloride material described in Example 1. Carbon dioxide was used as the blowing agent at a higher percentage than the nitrogen in Example 1.

The procedure for the tensile test and the density measurements was identical to those described in Example 1. The process conditions for Example 2 were as follows. The output was 49.8 kg/hr. The melt temperature measured immediately prior to the die was 187°C. The die pressure was 245 bar. The percent nitrogen was 0.201% by weight PVC formulation. The pressure drop rate (dP/dt) was 0.419 GPa/s.

Example 2 samples exhibited percent elongation at break of 114%. Samples from Example 2 had a void fraction of 0.31. As determined by SEM analysis, the average cell size at the surface of Example 2 samples was 20 microns and the average cell size at the center of Example 2 samples was 120 microns.

Example 3:

Example 3 was produced using the long single screw extrusion system (Acron Extruders, Canal Folten, OH) depicted schematically in Fig. 1. The screw diameter was (2 inches) and the L/D ratio was 32. The same polyvinyl chloride material described in Examples 1 was used. Carbon dioxide was used as the blowing agent.

The injection system included four equally-spaced circumferentially, radially-positioned ports. Each port included 176 orifices of (0.02 inch)diameter, for a total of 704 orifices. The ports were located at a distance of approximately 18 diameters from the feed hopper. A tapered rod die having a diameter of 1.0 mm (high dP/dt) was used.

The tensile test and density measurements procedures are identical to those described in Examples 1 and 2.

The process conditions for Example 3 are as follows. The output was 26.2 kg/hr. The melt temperature measured immediately prior to the die was 185°C. The die pressure was 245 bar. The percent nitrogen was 0.28% by weight PVC formulation. The pressure drop rate (dP/dt) was 5.5 GPa/s.

Example 3 samples had a void fraction of 0.39 and had a percent elongation at break of 86%. As illustrated in the SEM image of Fig. 4, the cell structure of an Example 3 sample included very fine cells, having an average cell size of about 20 microns. The cell size was generally uniform across the entire cross section, as illustrated in the image.

Further experimentation that varied different processing parameters identified the following potential trends, percent elongation at break decreases as (1) melt temperature decreases, (2) pressure drop rate decreases, and (3) blowing agent percentage increases.

**Claims**

1. A microcellular foam article comprising:

   a polymeric matrix including a plurality of cells having an average cell size of less than 100 microns, the polymeric matrix comprising a rigid PVC polymer, that is to say, having a Young's modulus (as measured in accordance to ASTM D-638) of greater than 1500 MPa, and an impact modifier in an amount less than 5 weight percent of the polymeric matrix,

   wherein the microcellular foam article has a percent elongation at break (as measured in accordance with ASTM D-638) of greater than 40%.

2. An article as in claim I wherein the polymer matrix consists essentially of rigid PVC polymer.

3. An article as in claim 1 wherein the rigid PVC polymer consists essentially of rigid polyvinyl chloride.

4. An article as in claim I wherein the polymeric matrix comprises the impact modifier in an amount less than 1 weight percent of the polymeric matrix.

**5.** An article as in claim 4 wherein the polymeric matrix is substantially free of the impact modifier.

**6.** An article as in claim 1 wherein the polymeric matrix is substantially free of plasticizer.

**7.** An article as in claim 1 having a percent elongation at break of greater than 75%.

**8.** An article as in claim 7 having a percent elongation at break of greater than 100%.

**9.** An article as in claim 8 having a percent elongation at break of greater than 110%.

**10.** An article as in claim 1 having a void fraction of greater than 0.5 and less than 0.5.

**11.** An article as in claim 1 including a portion having a thickness of less than 1.0 mm (0.040 inches).

**12.** An article as in claim 1 wherein the polymeric matrix further comprises a filler.

**13.** An article as in claim 12 wherein the filler is calcium carbonate.

**14.** An article as in claim 1 wherein the average cell size is less than 50 microns.

**15.** An article as in claim 14 wherein the average cell size is less than 20 microns.

**16.** An article as in claim 1 wherein the polymeric matrix includes a substantially closed cell structure.

**17.** An article as in claim 1 wherein the cell size decreases across the cross-section of the microcellular foam from a center region to a surface region.

**18.** An article as in claim 1 in the form of a tube.

**19.** A method of processing microcellular foam in a polymer processing apparatus including a polymer processing screw constructed to rotate in a barrel, the method comprising:

    urging polymeric material in a downstream direction in a polymer processing space between the polymer processing screw and the barrel, the polymeric material comprising a rigid polyvinyl chloride, and an impact modifier in an amount less than 5 weight percent of the polymeric material;
    introducing a blowing agent into the polymeric material in the polymer processing space to create a solution of blowing agent and polymeric material; and

    forming a microcellular foam article comprising a polymeric polymer matrix including an average cell size of less than 100 microns, the microcellular foam article having a percent elongation at break (as measured in accordance with ASTM D-638) of greater than 40%.

**20.** A method as in claim 19 wherein forming the microcellular foam article comprises extruding the solution through a shaping die fluidly connected to the polymer processing space.

**21.** A method as in claim 20 wherein the shaping die is tapered in a downstream direction.

**22.** A method as in claim 19 wherein forming the microcellular foam article comprises molding the solution in an injection mold fluidly connected to the polymer processing space.

**23.** A method as in claim 19 further comprising gelating the polymeric material to form a uniform fluid stream substantially free of air pockets prior to introducing the blowing agent.

**24.** A method as in claim 19 further comprising maintaining the melt temperature of the mixture of polymeric material and blowing agent at greater than 160°C and less than 195°C.

**25.** A method as in claim 19 further comprising maintaining the melt temperature at greater than 175°C and less than 190°C.

**26.** A method as in claim 19 wherein the polymeric matrix comprises the impact modifier in an amount less than 1 weight percent of the polymeric matrix.

**27.** A method as in claim 26 wherein the polymeric matrix is substantially free of the impact modifier.

**28.** A method as in claim 19 wherein the rigid vinyl halide consists essentially of rigid polyvinyl chloride.

**29.** A method as in claim 19 wherein the blowing agent comprises less than 1 weight percent of said solution.

**30.** A method as in claim 29 wherein the blowing agent comprises less than 0.5 weight percent of the solution.

**31.** A method as in claim 30 wherein the blowing agent comprises less than 0.1 weight percent of the solution.

**32.** A method as in claim 19, wherein the blowing agent comprises carbon dioxide.

**33.** A method as in claim 19, wherein the blowing agent consists essentially of carbon dioxide.

**34.** A method as in claim 19, wherein the blowing agent consists of carbon dioxide.

**35.** A method as in claim 19, wherein the blowing agent comprises nitrogen.

**36.** A method as in claim 19, wherein the blowing agent consists essentially of nitrogen.

**37.** A method as in claim 19, wherein the blowing agent consists of nitrogen.

**Patentansprüche**

**1.** Mikrozellularer Schaumartikel mit:

einer polymerischen Matrix mit mehreren Zellen, die eine durchschnittliche Zellengröße von weniger als 100 Mikrometern haben, wobei die polymerische Matrix ein Hart-PVC-Polymer aufweist, das heißt eines mit einem Young's-Modul (gemessen gemäß ASTM D-638) von mehr als 1500 MPa, und einen Schlagableiter in einer Menge von weniger als 5 Gewichtsprozent der polymerischen Matrix, wobei der mikrozellulare Schaumartikel beim Bruch eine Ausdehnung (gemessen gemäß ASTM D-638) von mehr als 40% hat.

**2.** Artikel nach Anspruch 1, wobei die polymerische Matrix im Wesentlichen aus einem Hart-PVC-Polymer besteht.

**3.** Artikel nach Anspruch 1, wobei das Hart-PVC-Polymer im Wesentlichen aus Hart-Polyvinylchlorid besteht.

**4.** Artikel nach Anspruch 1, wobei die polymerische Matrix den Schlagableiter in einer Menge von weniger als 1 Gewichtsprozent der polymerischen Matrix aufweist.

**5.** Artikel nach Anspruch 4, wobei die polymerische Matrix im Wesentlichen frei von dem Schlagableiter ist.

**6.** Artikel nach Anspruch 1, wobei die polymerische Matrix im Wesentlichen frei von einem Weichmacher ist.

**7.** Artikel nach Anspruch 1, mit einer Ausdehnung beim Bruch von mehr als 75%.

**8.** Artikel nach Anspruch 7, mit einer Ausdehnung beim Bruch von mehr als 100%.

**9.** Artikel nach Anspruch 8, mit einer Ausdehnung beim Bruch von mehr als 110%.

**10.** Artikel nach Anspruch 1 mit einem Dampfblasengehalt von mehr als 0,5 und weniger als 0,5.

**11.** Artikel nach Anspruch 1 mit einem Bereich mit einer Dicke von weniger als 1 mm (0,040 Inches).

**12.** Artikel nach Anspruch 1, wobei die polymerische Matrix weiter einen Füllstoff aufweist.

**13.** Artikel nach Anspruch 12, wobei der Füllstoff Kalziumkarbonat ist.

**14.** Artikel nach Anspruch 1, wobei die durchschnittliche Zellengröße weniger als 50 Mikrometer beträgt.

**15.** Artikel nach Anspruch 14, wobei die durchschnittliche Zellengröße weniger als 20 Mikrometer beträgt.

**16.** Artikel nach Anspruch 1, wobei die polymerische Matrix eine im Wesentlichen geschlossene Zellenstruktur beinhaltet.

**17.** Artikel nach Anspruch 1, wobei die Zellengröße über den Querschnitt des mikrozellularen Schaums von einem Mittenbereich bis zu einem Oberflächenbereich sinkt.

**18.** Artikel nach Anspruch 1 in Form einer Röhre.

**19.** Verfahren zum Bearbeiten von mikrozellularem Schaum in einer Vorrichtung zum Bearbeiten von Polymer mit einer Schraube zum Bearbeiten von Polymer, die so aufgebaut ist, dass sie sich in einem Zylinder drehen kann, wobei das Verfahren die folgenden Schritte aufweist:

Zwingen von polymerischem Material stromabwärts in einen Polymerbearbeitungsraum zwischen der Polymerbearbeitungsschraube und dem Zylinder, wobei das polymerische Material ein Hart-Polyvinylchlorid aufweist und einen Schlagableiter in einer Menge von weniger als 5 Gewichtsprozent des polymerischen Materials;

Einführen eines Treibmittels in das polymerische Material in dem Polymerbearbeitungsraum, um eine Lösung aus Treibmittel und polymerischem Material zu erzeugen; und

Ausbilden eines mikrozellularen Schaumartikels mit einer polymerischen Polymermatrix mit einer durchschnittlichen Zellengröße von weniger als 100 Mikrometern, wobei der mikrozellulare Schaumartikel eine Ausdehnung beim Bruch (gemessen gemäß ASTM D-638) von mehr als 40% hat.

20. Verfahren nach Anspruch 19, wobei das Ausbilden des mikrozellularen Schaumartikels das Extrudieren der Lösung durch eine Formdüse hindurch aufweist, die mit dem Polymerbearbeitungsraum in Fluidverbindung steht.

21. Verfahren nach Anspruch 20, wobei die Formdüse stromabwärts sich verjüngt.

22. Verfahren nach Anspruch 19, wobei das Ausformen des mikrozellularen Schaumartikels das Formen der Lösung in einer Spritzgussform aufweist, die mit dem Polymerbearbeitungsraum in Fluidverbindung steht.

23. Verfahren nach Anspruch 19, weiter mit dem Gelieren des polymerischen Materials, um einen gleichmäßigen Fluidstrom im Wesentlichen frei von Lufttaschen vor dem Einführen des Treibmittels auszubilden.

24. Verfahren nach Anspruch 19, weiter mit dem Aufrechterhalten der Schmelztemperatur der Mischung aus polymerischem Material und Treibmittel bei mehr als 160°C und weniger als 195°C.

25. Verfahren nach Anspruch 19, weiter mit dem Aufrechterhalten der Schmelztemperatur bei mehr als 175°C und weniger als 190°C.

26. Verfahren nach Anspruch 19, wobei die polymerische Matrix den Schlagableiter in einer Menge von weniger als 1 Gewichtsprozent der polymerischen Matrix aufweist.

27. Verfahren nach Anspruch 26, wobei die polymerische Matrix im Wesentlichen frei von dem Schlagableiter ist.

28. Verfahren nach Anspruch 19, wobei das Hart-Vinylhaloid im Wesentlichen aus Hart-Polyvinylchlorid besteht.

29. Verfahren nach Anspruch 19, wobei das Treibmittel weniger als 1 Gewichtsprozent der Lösung ausmacht.

30. Verfahren nach Anspruch 29, wobei das Treibmittel weniger als 0,5 Gewichtsprozent der Lösung ausmacht.

31. Verfahren nach Anspruch 30, wobei das Treibmittel weniger als 0,1 Gewichtsprozent der Lösung ausmacht.

32. Verfahren nach Anspruch 19, wobei das Treibmittel Kohlendioxid aufweist.

33. Verfahren nach Anspruch 19, wobei das Treibmittel im Wesentlichen aus Kohlendioxid besteht.

34. Verfahren nach Anspruch 19, wobei das Treibmittel aus Kohlendioxid besteht.

35. Verfahren nach Anspruch 19, wobei das Treibmittel Stickstoff aufweist.

36. Verfahren nach Anspruch 19, wobei das Treibmittel im Wesentlichen aus Stickstoff besteht.

37. Verfahren nach Anspruch 19, wobei das Treibmittel aus Stickstoff besteht.

## Revendications

1. Article en mousse microcellulaire comprenant :

une matrice polymère comprenant une pluralité de cellules ayant une taille de cellule moyenne inférieure à 100 μm, la matrice polymère comprenant un polymère de PVC rigide, à savoir ayant un module de Young (mesuré selon ASTM D-638) supérieur à 1500 MPa, et un modificateur de choc en une quantité inférieure à 5 % en poids de la matrice polymère,

dans lequel l'article en mousse microcellulaire a un pourcentage d'allongement à la rupture (mesuré selon ASTM D-638) supérieur à 40 %.

2. Article selon la revendication 1, dans lequel la matrice polymère est essentiellement constituée d'un polymère de PVC rigide.

3. Article selon la revendication 1, dans lequel le polymère de PVC rigide est essentiellement constitué de poly(chlorure de vinyle) rigide.

4. Article selon la revendication 1, dans lequel la matrice polymère comprend le modificateur de choc en une quantité inférieure à 1 % en poids de la matrice polymère.

5. Article selon la revendication 4, dans lequel la matrice polymère est essentiellement dépourvue de modificateur de choc.

6. Article selon la revendication 1, dans lequel la matrice polymère est essentiellement dépourvue de plastifiant.

**7.** Article selon la revendication 1, ayant un pourcentage d'allongement à la rupture supérieur à 75 %.

**8.** Article selon la revendication 7, ayant un pourcentage d'allongement à la rupture supérieur à 100 %.

**9.** Article selon la revendication 8, ayant un pourcentage d'allongement à la rupture supérieur à 110 %.

**10.** Article selon la revendication 1, ayant une fraction de vide supérieure à 0,5 et inférieure à 0,5.

**11.** Article selon la revendication 1, comprenant une partie ayant une épaisseur inférieure à 1,0 mm (0,040 pouce).

**12.** Article selon la revendication 1, dans lequel la matrice polymère comprend en outre une charge.

**13.** Article selon la revendication 12, dans lequel la charge est du carbonate de calcium.

**14.** Article selon la revendication 1, dans lequel la taille de cellule moyenne est inférieure à 50 µm.

**15.** Article selon la revendication 14, dans lequel la taille de cellule moyenne est inférieure à 20 µm.

**16.** Article selon la revendication 1, dans lequel la matrice polymère comprend une structure à cellule essentiellement fermée.

**17.** Article selon la revendication 1, dans lequel la taille de cellule diminue le long de la section de la mousse microcellulaire depuis une région centrale vers une région superficielle.

**18.** Article selon la revendication 1 sous forme d'un tube.

**19.** Procédé de transformation d'une mousse microcellulaire dans un appareil de traitement de polymères comprenant une vis de traitement de polymères conçue pour tourner dans un tambour, le procédé comprenant les étapes consistant à :

pousser un matériau polymère dans une direction en aval dans un espace de traitement de polymères entre la vis de traitement de polymères et le tambour, le matériau polymère comprenant un poly(chlorure de vinyle) rigide, et un modificateur de choc en une quantité inférieure à 5 % en poids du matériau polymère ; introduire un agent gonflant dans le matériau polymère dans l'espace de traitement de polymères pour créer une solution de l'agent gonflant et du matériau polymère ; et former un article en mousse microcellulaire comprenant une matrice de polymère ayant une taille de cellule moyenne inférieure à 100 µm, l'article en mousse microcellulaire ayant un pourcentage d'allongement à la rupture (mesuré selon ASTM D-638) supérieur à 40 %.

**20.** Procédé selon la revendication 19, dans lequel la formation de l'article en mousse microcellulaire comprend l'extrusion de la solution à travers une filière de façonnage en liaison fluide avec l'espace de traitement de polymères.

**21.** Procédé selon la revendication 20, dans lequel la filière de façonnage est effilée dans une direction vers l'aval.

**22.** Procédé selon la revendication 19, dans lequel la formation de l'article en mousse microcellulaire comprend le moulage de la solution dans un moule à injection en liaison fluide avec l'espace de traitement de polymères.

**23.** Procédé selon la revendication 19, comprenant en outre la gélatinisation du matériau polymère pour former un courant fluide uniforme essentiellement dépourvu de poches d'air avant l'introduction de l'agent gonflant.

**24.** Procédé selon la revendication 19, comprenant en outre le maintien de la température de fusion du mélange du matériau polymère et de l'agent gonflant à plus de 160°C et à moins de 195°C.

**25.** Procédé selon la revendication 19, comprenant en outre le maintien de la température de fusion à plus de 175°C et à moins de 190°C.

**26.** Procédé selon la revendication 19, dans lequel la matrice polymère comprend le modificateur de choc en une quantité inférieure à 1 % en poids de la matrice polymère.

**27.** Procédé selon la revendication 26, dans lequel la matrice polymère est essentiellement dépourvue de modificateur de choc.

**28.** Procédé selon la revendication 19, dans lequel l'halogénure de vinyle rigide est essentiellement constitué de poly(chlorure de vinyle) rigide.

**29.** Procédé selon la revendication 19, dans lequel l'agent gonflant constitue moins de 1 % en poids de ladite solution.

**30.** Procédé selon la revendication 29, dans lequel l'agent gonflant constitue moins de 0,5 % en poids de la solution.

**31.** Procédé selon la revendication 30, dans lequel l'agent gonflant constitue moins de 0,1 % en poids de la solution.

**32.** Procédé selon la revendication 19, dans lequel l'agent gonflant comprend du dioxyde de carbone.

**33.** Procédé selon la revendication 19, dans lequel l'agent gonflant est essentiellement constitué de dioxyde de carbone.

**34.** Procédé selon la revendication 19, dans lequel l'agent gonflant est constitué de dioxyde de carbone.

**35.** Procédé selon la revendication 19, dans lequel l'agent gonflant comprend de l'azote.

**36.** Procédé selon la revendication 19, dans lequel l'agent gonflant est essentiellement constitué d'azote.

**37.** Procédé selon la revendication 19, dans lequel l'agent gonflant est constitué d'azote.

*FIG. 1*

FIG. 2

FIG. 3

FIG. 3A

FIG. 4

100υ

FIG. 5